# FASCICULE DE BREVET EUROPEEN

(11) **EP 3 559 165 B1**
(45) Date de publication et mention de la délivrance du brevet: **14.09.2022**
(21) Numéro de dépôt: 17832476.0
(22) Date de dépôt: 08.12.2017
(51) Int. Cl.: C10G 45/36, B01J 37/02, B01J 21/04, B01J 23/755

(54) **PROCEDE D'HYDROGENATION SELECTIVE METTANT EN OEUVRE UN CATALYSEUR A BASE DE NICKEL PREPARE AU MOYEN D'UN ADDITIF COMPRENANT UNE FONCTION ACIDE CARBOXYLIQUE**
SELEKTIVER HYDROGENATIONSPROZESS MIT EINEM NICKELBASIERTEN KATALYSATOR, HERGESTELLT DURCH EIN ADDITIV MIT CARBOXYLSÄUREFUNKTION
SELECTIVE HYDROGENATION PROCESS WITH A NICKEL BASED CATALYST PREPARED BY AN ADDITIVE HAVING A CARBOXYLIC ACID FUNCTION

(30) Priorité: 22.12.2016 FR 1663091
(43) Date de publication de la demande: 30.10.2019
(73) Titulaire: IFP Energies nouvelles, 92852 Rueil-Malmaison (FR)
(72) Inventeur: DUBREUIL, Anne-Claire, 69003 Lyon (FR); MARTEL, Agathe, 69002 Lyon (FR)
(74) Mandataire: IFP Energies nouvelles
(86) Numéro de dépôt international: PCT/EP2017/082023
(87) Numéro de publication internationale: WO 2018/114396

(56) Documents cités:
- FR-A1- 2 963 344
- FR-A1- 2 984 761
- FR-A1- 2 994 661
- FR-A1- 3 035 008

## Description

### Domaine de l'invention

L'invention a pour objet un procédé d'hydrogénation sélective de composés polyinsaturés dans une charge hydrocarbonée, notamment dans les coupes C2-C5 de vapocraquage et les essences de vapocraquage, en présence d'un catalyseur à base de nickel supporté sur un support en alumine préparé au moyen d'un additif organique comprenant au moins une fonction de type acide carboxylique.

### Etat de la technique

Les catalyseurs d'hydrogénation sélective de composés polyinsaturés sont généralement à base de métaux du groupe VIII de la classification périodique des éléments tel que le nickel. Le métal se présente sous la forme de particules métalliques nanométriques déposées sur un support qui peut être un oxyde réfractaire. La teneur en métal du groupe VIII, la présence éventuelle d'un deuxième élément métallique, la taille des particules de métal et la répartition de la phase active dans le support ainsi que la nature et distribution poreuse du support sont des paramètres qui peuvent avoir une importance sur les performances des catalyseurs.

La vitesse de la réaction d'hydrogénation est gouvernée par plusieurs critères, tels que la diffusion des réactifs vers la surface du catalyseur (limitations diffusionnelles externes), la diffusion des réactifs dans la porosité du support vers les sites actifs (limitations diffusionnelles internes) et les propriétés intrinsèques de la phase active telles que la taille des particules métalliques et la répartition de la phase active au sein du support.

En ce qui concerne la taille des particules métalliques, il est généralement admis que le catalyseur est d'autant plus actif que la taille des particules métalliques est petite. De plus, il est important d'obtenir une répartition en taille des particules centrée sur la valeur optimale ainsi qu'une répartition étroite autour de cette valeur.

En vue d'obtenir de meilleures performances catalytiques, notamment une meilleure sélectivité et/ou activité, il est connu dans l'état de la technique de procéder à l'utilisation d'additifs de type composés organiques pour la préparation de catalyseurs métalliques d'hydrogénation sélective. Par exemple, la demande FR2984761 divulgue un procédé de préparation d'un catalyseur d'hydrogénation sélective comprenant un support et une phase active comprenant un métal du groupe VIII, ledit catalyseur étant préparé par un procédé comprenant une étape de d'imprégnation d'une solution contenant un précurseur du métal du groupe VIII et un additif organique, plus particulièrement un composé organique présentant une à trois fonctions acides carboxyliques, une étape de séchage du support imprégné, et une étape de calcination du support séché afin d'obtenir le catalyseur.

Le brevet FR2963344 enseigne l'utilisation de composés organiques comprenant un oligosaccharide cyclique composés d'au moins 6 sous-unités glucopyranose liées en α-(1,4).

Le brevet FR2994661 concerne un catalyseur supporté à base de nanoparticules métalliques de nickel possédant des morphologies définies et contenant également du brome, son procédé de préparation et son utilisation dans des réactions d'hydrogénation sélective.

Dans ce contexte, un des objectifs de la présente invention est de proposer un procédé d'hydrogénation sélective de composés polyinsaturés tels que les dioléfines et/ou les acétyléniques et/ou les alcénylaromatiques en présence d'un catalyseur supporté à phase active de nickel, préparé au moyen d'un additif organique particulier permettant l'obtention de performances en hydrogénation en terme d'activité au moins aussi bonnes, voire meilleures, que les procédés de l'art antérieur que les procédés connus de l'état de la technique.

La demanderesse a découvert qu'un catalyseur à base de nickel supporté sur alumine préparé au moyen d'un additif organique de type acide carboxylique, et dont l'imprégnation dudit additif est réalisée dans une étape distincte de l'étape d'imprégnation du nickel, présente, lorsqu'il est mis en œuvre dans un procédé d'hydrogénation sélective, des performances catalytiques améliorées, en terme d'activité catalytique. Il en résulte une meilleure conversion de la charge dans des conditions opératoires identiques.

### Objets de l'invention

La présente invention concerne un procédé d'hydrogénation sélective de composés polyinsaturés contenant au moins 2 atomes de carbone par molécule, comme décrit dans les revendications.

### Description détaillée

### Définitions

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

Les propriétés texturales et structurales du support et du catalyseur décrits ci-après sont déterminées par les méthodes de caractérisation connues de l'homme du métier. Le volume poreux total et la distribution poreuse sont déterminés dans la présente invention par porosimétrie à l'azote tel que décrit dans l'ouvrage « Adsorption by powders and porous solids. Principles, methodology and applications » écrit par F. Rouquérol, J. Rouquérol et K. Sing, Academic Press, 1999.

On entend par surface spécifique, la surface spécifique BET (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309.

On entend par taille des nanoparticules de nickel, le diamètre moyen des cristallites de nickel sous forme oxyde. Le diamètre moyen des cristallites de nickel sous forme oxyde est déterminé par diffraction des rayons X, à partir de la largeur de la raie de diffraction située à l'angle 2thêta=43° (c'est-à-dire selon la direction cristallographique [200]) à l'aide de la relation de Scherrer. Cette méthode, utilisée en diffraction des rayons X sur des poudres ou échantillons polycristallins qui relie la largeur à mi-hauteur des pics de diffraction à la taille des particules, est décrite en détail dans la référence : Appl. Cryst. (1978), 11, 102-113 « Scherrer after sixty years: A survey and some new results in the determination of crystallite size», J. I. Langford and A. J. C. Wilson.

### Description du procédé

La présente invention a pour objet un procédé d'hydrogénation sélective de composés polyinsaturés contenant au moins 2 atomes de carbone par molécule, tels que les dioléfines et/ou les acétyléniques et/ou les alcénylaromatiques, aussi appelés styréniques, contenus dans une charge d'hydrocarbures ayant un point d'ébullition final inférieur ou égal à 300°C, lequel procédé étant réalisé à une température comprise entre 0 et 300°C, à une pression comprise entre 0,1 et 10 MPa, à un ratio molaire hydrogène/(composés polyinsaturés à hydrogéner) compris entre 0,1 et 10 et à une vitesse volumique horaire comprise entre 0,1 et 200 h⁻¹ lorsque le procédé est réalisé en phase liquide, ou à un ratio molaire hydrogène/(composés polyinsaturés à hydrogéner) compris entre 0,5 et 1000 et à une vitesse volumique horaire entre 100 et 40000 h⁻¹ lorsque le procédé est réalisé en phase gazeuse, en présence d'un catalyseur comprenant un support en alumine et une phase active comprenant du nickel, ladite phase active ne comprenant pas de métal du groupe VIB, le nickel se présentant sous la forme de nanoparticules dont leur taille, mesurée sous leur forme oxyde, est comprise entre 4 et 6 nm, ledit catalyseur étant préparé par un procédé comprenant au moins :
i) une étape de mise en contact dudit support avec au moins une solution contenant au moins un précurseur de nickel ;
ii) une étape de mise en contact dudit support avec au moins une solution contenant au moins un composé organique comprenant au moins une fonction acide carboxylique ;
iii) une étape de séchage dudit support imprégné à une température inférieure à 250°C, de manière à obtenir un catalyseur séché ;
iv) une étape de calcination dudit catalyseur obtenu à l'étape iii) à une température comprise entre 250 et 1000°C;
caractérisé en ce que l'étape i) est réalisée avant l'étape ii).

Les composés organiques mono-insaturés tels que par exemple l'éthylène et le propylène, sont à la source de la fabrication de polymères, de matières plastiques et d'autres produits chimiques à valeur ajoutée. Ces composés sont obtenus à partir du gaz naturel, du naphta ou du gazole qui ont été traités par des procédés de vapocraquage ou de craquage catalytique. Ces procédés sont opérés à haute température et produisent, en plus des composés mono-insaturés recherchés, des composés organiques polyinsaturés tels que l'acétylène, le propadiène et le méthylacétylène (ou propyne), le 1-2-butadiène et le 1-3-butadiène, le vinylacétylène et l'éthylacétylène, et d'autres composés polyinsaturés dont le point d'ébullition correspond à la coupe C5+ (composés hydrocarbonés ayant au moins 5 atomes de carbone), en particulier des composés dioléfiniques ou styréniques ou indéniques. Ces composés polyinsaturés sont très réactifs et conduisent à des réactions parasites dans les unités de polymérisation. Il est donc nécessaire de les éliminer avant de valoriser ces coupes.

L'hydrogénation sélective est le principal traitement développé pour éliminer spécifiquement les composés polyinsaturés indésirables de ces charges d'hydrocarbures. Elle permet la conversion des composés polyinsaturés vers les alcènes ou aromatiques correspondants en évitant leur saturation totale et donc la formation des alcanes ou naphtènes correspondants. Dans le cas d'essences de vapocraquage utilisées comme charge, l'hydrogénation sélective permet également d'hydrogéner sélectivement les alcénylaromatiques en aromatiques en évitant l'hydrogénation des noyaux aromatiques.

La charge d'hydrocarbures traitée dans le procédé d'hydrogénation sélective a un point d'ébullition final inférieur ou égal à 300°C et contient au moins 2 atomes de carbone par molécule et comprend au moins un composé polyinsaturé. On entend par « composés polyinsaturés » des composés comportant au moins une fonction acétylénique et/ou au moins une fonction diénique et/ou au moins une fonction alcénylaromatique.

Plus particulièrement, la charge est sélectionnée dans le groupe constitué par une coupe C2 de vapocraquage, une coupe C2-C3 de vapocraquage, une coupe C3 de vapocraquage, une coupe C4 de vapocraquage, une coupe C5 de vapocraquage et une essence de vapocraquage encore appelée essence de pyrolyse ou coupe C5+.

La coupe C2 de vapocraquage, avantageusement utilisée pour la mise en œuvre du procédé d'hydrogénation sélective selon l'invention, présente par exemple la composition suivante : entre 40 et 95 % poids d'éthylène, de l'ordre de 0,1 à 5 % poids d'acétylène, le reste étant essentiellement de l'éthane et du méthane. Dans certaines coupes C2 de vapocraquage, entre 0,1 et 1 % poids de composés en C3 peut aussi être présent.

La coupe C3 de vapocraquage, avantageusement utilisée pour la mise en œuvre du procédé d'hydrogénation sélective selon l'invention, présente par exemple la composition moyenne suivante : de l'ordre de 90 % poids de propylène, de l'ordre de 1 à 8 % poids de propadiène et de méthylacétylène, le reste étant essentiellement du propane. Dans certaines coupes C3, entre 0,1 et 2 % poids de composés en C2 et de composés en C4 peut aussi être présent.

Une coupe C2 - C3 peut aussi être avantageusement utilisée pour la mise en œuvre du procédé d'hydrogénation sélective selon l'invention. Elle présente par exemple la composition suivante : de l'ordre de 0,1 à 5 % poids d'acétylène, de l'ordre de 0,1 à 3 % poids de propadiène et de méthylacétylène, de l'ordre de 30 % poids d'éthylène, de l'ordre de 5 % poids de propylène, le reste étant essentiellement du méthane, de l'éthane et du propane. Cette charge peut aussi contenir entre 0,1 et 2 % poids de composés en C4.

La coupe C4 de vapocraquage, avantageusement utilisée pour la mise en œuvre du procédé d'hydrogénation sélective selon l'invention, présente par exemple la composition massique moyenne suivante : 1 % poids de butane, 46,5 % poids de butène, 51 % poids de butadiène, 1,3 % poids de vinylacétylène et 0,2 % poids de butyne. Dans certaines coupes C4, entre 0,1 et 2 % poids de composés en C3 et de composés en C5 peut aussi être présent.

La coupe C5 de vapocraquage, avantageusement utilisée pour la mise en œuvre du procédé d'hydrogénation sélective selon l'invention, présente par exemple la composition suivante : 21 % poids de pentanes, 45 % poids de pentènes, 34 % poids de pentadiènes.

L'essence de vapocraquage ou essence de pyrolyse, avantageusement utilisée pour la mise en œuvre du procédé d'hydrogénation sélective selon l'invention, correspond à une coupe hydrocarbonée dont la température d'ébullition est généralement comprise entre 0 et 300°C, de préférence entre 10 et 250°C. Les hydrocarbures polyinsaturés à hydrogéner présents dans ladite essence de vapocraquage sont en particulier des composés dioléfiniques (butadiène, isoprène, cyclopentadiène...), des composés styréniques (styrène, alpha-méthylstyrène...) et des composés indéniques (indène...). L'essence de vapocraquage comprend généralement la coupe C5-C12 avec des traces de C3, C4, C13, C14, C15 (par exemple entre 0,1 et 3% poids pour chacune de ces coupes). Par exemple, une charge formée d'essence de pyrolyse a généralement une composition suivante: 5 à 30 % poids de composés saturés (paraffines et naphtènes), 40 à 80 % poids de composés aromatiques, 5 à 20 % poids de mono-oléfines, 5 à 40 % poids de dioléfines, 1 à 20 % poids de composés alcénylaromatiques, l'ensemble des composés formant 100 %. Elle contient également de 0 à 1000 ppm poids de soufre, de préférence de 0 à 500 ppm poids de soufre.

De manière préférée, la charge d'hydrocarbures polyinsaturés traitée conformément au procédé d'hydrogénation sélective selon l'invention est une coupe C2 de vapocraquage, ou une coupe C2-C3 de vapocraquage, ou une essence de vapocraquage.

Le procédé d'hydrogénation sélective selon l'invention vise à éliminer lesdits hydrocarbures polyinsaturés présents dans ladite charge à hydrogéner sans hydrogéner les hydrocarbures monoinsaturés. Par exemple, lorsque ladite charge est une coupe C2, le procédé d'hydrogénation sélective vise à hydrogéner sélectivement l'acétylène. Lorsque ladite charge est une coupe C3, le procédé d'hydrogénation sélective vise à hydrogéner sélectivement le propadiène et le méthylacétylène. Dans le cas d'une coupe C4, on vise à éliminer le butadiène, le vinylacétylène (VAC) et le butyne, dans le cas d'une coupe C5, on vise à éliminer les pentadiènes. Lorsque ladite charge est une essence de vapocraquage, le procédé d'hydrogénation sélective vise à hydrogéner sélectivement lesdits hydrocarbures polyinsaturés présents dans ladite charge à traiter de manière à ce que les composés dioléfiniques soient partiellement hydrogénés en mono-oléfines et que les composés styréniques et indéniques soient partiellement hydrogénés en composés aromatiques correspondants en évitant l'hydrogénation des noyaux aromatiques.

La mise en œuvre technologique du procédé d'hydrogénation sélective est par exemple réalisée par injection, en courant ascendant ou descendant, de la charge d'hydrocarbures polyinsaturés et de l'hydrogène dans au moins un réacteur à lit fixe. Ledit réacteur peut être de type isotherme ou de type adiabatique. Un réacteur adiabatique est préféré. La charge d'hydrocarbures polyinsaturés peut avantageusement être diluée par une ou plusieurs ré-injection(s) de l'effluent, issu dudit réacteur où se produit la réaction d'hydrogénation sélective, en divers points du réacteur, situés entre l'entrée et la sortie du réacteur afin de limiter le gradient de température dans le réacteur. La mise en œuvre technologique du procédé d'hydrogénation sélective selon l'invention peut également être avantageusement réalisée par l'implantation d'au moins dudit catalyseur supporté dans une colonne de distillation réactive ou dans des réacteurs - échangeurs ou dans un réacteur de type slurry. Le flux d'hydrogène peut être introduit en même temps que la charge à hydrogéner et/ou en un ou plusieurs points différents du réacteur.

L'hydrogénation sélective des coupes C2, C2-C3, C3, C4, C5 et C5+ de vapocraquage peut être réalisée en phase gazeuse ou en phase liquide, de préférence en phase liquide pour les coupes C3, C4, C5 et C5+ et en phase gazeuse pour les coupes C2 et C2-C3. Une réaction en phase liquide permet d'abaisser le coût énergétique et d'augmenter la durée de cycle du catalyseur.

D'une manière générale, l'hydrogénation sélective d'une charge d'hydrocarbures contenant des composés polyinsaturés contenant au moins 2 atomes de carbone par molécule et ayant un point d'ébullition final inférieur ou égal à 300°C s'effectue à une température comprise entre 0 et 300°C, à une pression comprise entre 0,1 et 10 MPa, à un ratio molaire hydrogène/(composés polyinsaturés à hydrogéner) compris entre 0,1 et 10 et à une vitesse volumique horaire V.V.H. (définie comme le rapport du débit volumique de charge sur le volume du catalyseur) comprise entre 0,1 et 200 h⁻¹ pour un procédé réalisé en phase liquide, ou à un ratio molaire hydrogène/(composés polyinsaturés à hydrogéner) compris entre 0,5 et 1000 et à une vitesse volumique horaire V.V.H. comprise entre 100 et 40000 h⁻¹ pour un procédé réalisé en phase gazeuse.

Dans un mode de réalisation selon l'invention, lorsqu'on effectue un procédé d'hydrogénation sélective dans lequel la charge est une essence de vapocraquage comportant des composés polyinsaturés, le ratio molaire (hydrogène)/(composés polyinsaturés à hydrogéner) est généralement compris entre 0,5 et 10, de préférence entre 0,7 et 5,0 et de manière encore plus préférée entre 1,0 et 2,0, la température est comprise entre 0 et 200°C, de préférence entre 20 et 200 °C et de manière encore plus préférée entre 30 et 180°C, la vitesse volumique horaire (V.V.H.) est comprise généralement entre 0,5 et 100 h⁻¹, de préférence entre 1 et 50 h⁻¹ et la pression est généralement comprise entre 0,3 et 8,0 MPa, de préférence entre 1,0 et 7,0 MPa et de manière encore plus préférée entre 1,5 et 4,0 MPa.

Plus préférentiellement, on effectue un procédé d'hydrogénation sélective dans lequel la charge est une essence de vapocraquage comportant des composés polyinsaturés, le ratio molaire hydrogène/(composés polyinsaturés à hydrogéner) est compris entre 0,7 et 5,0, la température est comprise entre 20 et 200 °C, la vitesse volumique horaire (V.V.H.) est comprise généralement entre 1 et 50 h⁻¹ et la pression est comprise entre 1,0 et 7,0 MPa.

Encore plus préférentiellement, on effectue un procédé d'hydrogénation sélective dans lequel la charge est une essence de vapocraquage comportant des composés polyinsaturés, le ratio molaire hydrogène/(composés polyinsaturés à hydrogéner) est compris entre 1,0 et 2,0, la température est comprise entre 30 et 180°C, la vitesse volumique horaire (V.V.H.) est comprise généralement entre 1 et 50 h⁻¹ et la pression est comprise entre 1,5 et 4,0 MPa.

Le débit d'hydrogène est ajusté afin d'en disposer en quantité suffisante pour hydrogéner théoriquement l'ensemble des composés polyinsaturés et de maintenir un excès d'hydrogène en sortie de réacteur.

Dans un autre mode de réalisation selon l'invention, lorsqu'on effectue un procédé d'hydrogénation sélective dans lequel la charge est une coupe C2 de vapocraquage et/ou une coupe C2-C3 de vapocraquage comportant des composés polyinsaturés, le ratio molaire (hydrogène)/(composés polyinsaturés à hydrogéner) est généralement compris entre 0,5 et 1000, de préférence entre 0,7 et 800, la température est comprise entre 0 et 300°C, de préférence entre 15 et 280 °C, la vitesse volumique horaire (V.V.H.) est comprise généralement entre 100 et 40000 h⁻¹, de préférence entre 500 et 30000 h⁻¹ et la pression est généralement comprise entre 0,1 et 6,0 MPa, de préférence entre 0,2 et 5,0 MPa.

### Description du catalyseur

Le catalyseur employé pour la mise en œuvre du procédé d'hydrogénation sélective selon l'invention comprend une phase active déposée sur un support comprenant de l'alumine, ladite phase active comprenant du nickel. Ladite phase active est dépourvue de métaux appartenant au groupe VIB (Cr, Mo, W) de la classification périodique des éléments. Plus particulièrement, la phase active ne comprend pas de molybdène ou de tungstène. Encore plus préférentiellement, la phase active est constituée de nickel. Selon l'invention, la teneur en élément nickel dans le catalyseur est comprise entre 1 et 35% en poids de la masse de catalyseur, de préférence entre 5 et 30% en poids, plus préférentiellement entre 8 et 25% en poids, et encore plus préférentiellement entre 12 et 23% en poids. La teneur en Ni est mesurée par fluorescence X.

Le nickel se présente sous la forme de nanoparticules déposées sur ledit support. La taille des nanoparticules de nickel dans le catalyseur, mesurée sous leur forme oxyde, est entre 4 et 6 nm. La phase active dudit catalyseur comprend également de manière avantageuse au moins un métal additionnel choisi parmi les métaux du groupe VIII, les métaux du groupe IB et/ou de l'étain. De manière préférée, le métal additionnel du groupe VIII est choisi parmi le palladium, le platine, le ruthénium, le rhodium et l'iridium. De manière préférée, le métal additionnel du groupe IB est choisi parmi le cuivre, l'or et l'argent. Le(s)dit(s) métal(ux) additionnel(s) est(sont) préférentiellement présent(s) avec une teneur représentant de 0,01 à 20% poids de la masse du catalyseur, de préférence de 0,05 à 10% poids de la masse du catalyseur et de manière encore plus préférée de 0,05 à 5% poids de la masse dudit catalyseur. L'étain est préférentiellement présent à une teneur représentant de 0,02 à 15% poids de la masse du catalyseur, de telle sorte que le ratio molaire Sn/Ni soit compris entre 0,01 et 0,2, de préférence entre 0,025 à 0,055, et de manière encore plus préférée entre 0,03 à 0,05.

Ledit catalyseur selon l'invention est généralement présenté sous toutes les formes connues de l'Homme du métier, par exemple sous forme de billes, d'extrudés, de tablettes, de pastilles, de cylindres creux ou d'agglomérats irréguliers et non sphériques dont la forme spécifique peut résulter d'une étape de concassage.

Dans un mode de réalisation particulier selon l'invention, le catalyseur est constitué d'extrudés de diamètre généralement compris entre 0,5 et 10 mm, de préférence entre 0,8 et 3,2 mm et de manière très préférée entre 1,0 et 2,5 mm. Celui-ci peut être avantageusement présenté sous la forme d'extrudés cylindriques, multilobés, trilobés ou quadrilobés. De préférence sa forme sera trilobée ou quadrilobée. La forme des lobes pourra être ajustée selon toutes les méthodes connues de l'art antérieur.

Dans un autre mode de réalisation particulier selon l'invention, le catalyseur se présente sous la forme de billes de diamètre compris entre 1 et 8 mm, de préférence entre 2 et 7 mm.

Le support sur lequel est déposée ladite phase active comprend de l'alumine (Al₂O₃).

Dans une première variante de réalisation, l'alumine présente dans ledit support est une alumine de transition telle qu'une alumine gamma, delta, thêta, chi, rho, êta, ou kappa, seule ou en mélange. De manière plus préférée, l'alumine est une alumine de transition gamma, delta ou thêta, seule ou en mélange.

Dans une seconde variante de réalisation, l'alumine présenta dans ledit support est une alumine alpha.

Le support peut comprendre un autre oxyde différent de l'alumine, tel que la silice (SiO₂), le dioxyde de titane (TiO₂), la cérine (CeO₂) et la zircone (ZrO₂). Le support peut être une silice-alumine. De manière très préférée, ledit support est constitué uniquement d'alumine.

Le volume poreux du support est généralement compris entre 0,1 cm³/g et 1,5 cm³/g, de préférence compris entre 0,5 cm³/g et 1,0 cm³/g. La surface spécifique du support est généralement supérieure ou égale à 5 m²/g, de préférence supérieure ou égale à 30 m²/g, plus préférentiellement comprise entre 40 m²/g et 250 m²/g, et encore plus préférentiellement comprise entre 50 m²/g et 200 m²/g.

### Description du procédé de préparation du catalyseur

D'une manière générale, le catalyseur utilisé dans le cadre du procédé d'hydrogénation sélective est préparé par un procédé comprenant au moins les étapes suivantes :
i) une étape de mise en contact dudit support avec au moins une solution contenant au moins un précurseur de nickel ;
ii) une étape de mise en contact dudit support avec au moins une solution contenant au moins un composé organique comprenant au moins une fonction acide carboxylique ;
iii) une étape de séchage dudit support imprégné à une température inférieure à 250°C, de manière à obtenir un catalyseur séché ;
iv) une étape de calcination dudit catalyseur obtenu à l'étape iii) à une température comprise entre 250 et 1000°C ;
caractérisé en ce que l'étape i) est réalisée avant l'étape ii).

### Etape i) Mise en contact du précurseur de nickel avec le support

Le dépôt du nickel sur ledit support, conformément à la mise en œuvre de ladite étape i), peut être réalisé par toute méthode bien connue de l'Homme du métier. En particulier, ladite étape i) peut être réalisée par imprégnation, à sec ou en excès, ou encore par dépôt - précipitation, selon des méthodes bien connues de l'Homme du métier.

Ladite étape i) est préférentiellement réalisée par imprégnation du support consistant par exemple en la mise en contact dudit support avec au moins une solution, aqueuse ou organique (par exemple le méthanol ou l'éthanol ou le phénol ou l'acétone ou le toluène ou le diméthylsulfoxyde (DMSO)) ou bien constituée d'un mélange d'eau et d'au moins un solvant organique, contenant au moins un précurseur de nickel au moins partiellement à l'état dissous, ou encore en la mise en contact dudit support avec au moins une solution colloïdale d'au moins un précurseur du nickel, sous forme oxydée (nanoparticules d'oxyde, d'oxy(hydroxyde) ou d'hydroxyde du nickel) ou sous forme réduite (nanoparticules métalliques du nickel à l'état réduit). De préférence, la solution est aqueuse. Le pH de cette solution pourra être modifié par l'ajout éventuel d'un acide ou d'une base. Selon une autre variante préférée, la solution aqueuse peut contenir de l'ammoniaque ou des ions ammonium NH₄⁺.

De manière préférée, ladite étape i) est réalisée par imprégnation à sec, laquelle consiste à mettre en contact le support du catalyseur avec une solution, contenant au moins un précurseur du nickel, dont le volume de la solution est compris entre 0,25 et 1,5 fois le volume poreux du support à imprégner.

Lorsque le précurseur de nickel est introduit en solution aqueuse, on utilise avantageusement un précurseur de nickel sous forme de nitrate, de carbonate, de chlorure, de sulfate, d'hydroxyde, d'hydroxycarbonate, de formiate, d'acétate, d'oxalate, de complexes formés avec les acétylacétonates, ou encore de complexes tétrammine ou hexammine, ou de tout autre dérivé inorganique soluble en solution aqueuse, laquelle est mise en contact avec ledit support. On utilise avantageusement comme précurseur de nickel, le nitrate de nickel, le carbonate de nickel, le chlorure de nickel, l'hydroxyde de nickel, le hydroxycarbonate de nickel. De manière très préférée, le précurseur de nickel est le nitrate de nickel, le carbonate de nickel ou l'hydroxyde de nickel.

Les quantités du ou des précurseurs de nickel introduites dans la solution sont choisies de telle manière que la teneur totale en élément nickel est comprise entre 1 et 35% en poids de la masse de catalyseur, de préférence entre 5 et 30% en poids, plus préférentiellement entre 8 et 25% en poids, et encore plus préférentiellement entre 12 et 23% en poids.

Dans le mode de réalisation dans lequel l'étape i) est réalisée par imprégnation, à sec ou en excès, de préférence à sec, l'imprégnation du nickel avec le support peut être avantageusement réalisée via au moins deux cycles d'imprégnation, en utilisant des précurseurs de nickel identiques ou différents à chaque cycle. Dans ce cas, chaque imprégnation est avantageusement suivie d'un séchage et éventuellement d'un traitement thermique.

Tout autre élément supplémentaire peut être introduit soit au moment de l'étape de mise en contact du nickel avec le support soit dans une autre étape distincte de mise en contact dudit élément supplémentaire avec le support. Lorsqu'on souhaite introduire un métal additionnel choisi parmi les métaux du groupe VIII, les métaux du groupe IB et/ou de l'étain, on utilise avantageusement comme précurseur un sel choisi parmi le nitrate, le sulfate, le chlorure ou tout autre précurseur conventionnel. Lorsqu'on introduit tout autre élément supplémentaire dans une étape distincte de mise en contact dudit élément supplémentaire avec le support, ladite étape peut être suivie d'un séchage et éventuellement d'un traitement thermique.

### Etape ii) mise en contact du composé organique avec le support

La mise en contact dudit support avec au moins une solution contenant au moins un composé organique comprenant au moins une fonction acide carboxylique, conformément à la mise en œuvre de ladite étape ii), peut être réalisé par toute méthode bien connue de l'Homme du métier. En particulier, ladite étape ii) peut être réalisée par imprégnation, à sec ou en excès selon des méthodes bien connues de l'Homme du métier. De manière préférée, ladite étape ii) est réalisée par imprégnation à sec, laquelle consiste à mettre en contact le support du catalyseur avec un volume de ladite solution compris entre 0,25 et 1,5 fois le volume poreux du support à imprégner.

Ladite solution contenant au moins un composé organique comprenant au moins une fonction acide carboxylique peut être aqueuse ou organique (par exemple le méthanol ou l'éthanol ou le phénol ou l'acétone ou le toluène ou le diméthylsulfoxyde (DMSO)) ou bien constituée d'un mélange d'eau et d'au moins un solvant organique. Ledit composé organique est préalablement au moins partiellement dissous dans ladite solution à la concentration voulue. De préférence, ladite solution est aqueuse ou contient de l'éthanol. De façon encore plus préférée, ladite solution est aqueuse. Le pH de ladite solution pourra être modifié par l'ajout éventuel d'un acide ou d'une base. Dans un autre mode de réalisation possible, le solvant peut être absent de la solution d'imprégnation.

Dans le mode de réalisation dans lequel l'étape ii) est réalisée par imprégnation, à sec ou en excès, de préférence à sec, l'imprégnation du support peut être réalisée en utilisant une ou plusieurs solutions dont l'une au moins desdites solutions comprend au moins un composé organique comprenant au moins une fonction acide carboxylique.

Dans le mode de réalisation dans lequel l'étape ii) est réalisée par imprégnation, à sec ou en excès, de préférence à sec, l'imprégnation du support peut être avantageusement réalisée via au moins deux cycles d'imprégnation, en utilisant des composés organiques, ou des mélanges de composés organiques dont l'un au moins comprend au moins une fonction acide carboxylique, identiques ou différents à chaque cycle. Dans ce cas, chaque imprégnation est avantageusement suivie d'un séchage et éventuellement d'un traitement thermique.

Ledit composé organique comprenant au moins une fonction acide carboxylique peut être un composé organique aliphatique, saturé ou insaturé, ou un composé organique aromatique.

Ledit composé organique comprend entre 1 et 10 atomes de carbone. De préférence, lorsque ledit composé organique est un composé organique aliphatique, saturé ou insaturé, ledit composé comprend entre 1 et 9 atomes de carbone, de préférence entre 2 et 7 atomes de carbone.

De préférence, lorsque ledit composé organique est un composé organique aromatique, ledit composé comprend entre 7 et 10 atomes de carbone, de préférence entre 7 et 9 atomes de carbone.

Le rapport molaire dudit composé organique comprenant au moins une fonction acide carboxylique introduit lors de l'étape ii) par rapport à l'élément nickel introduit à l'étape i) est compris entre 0,01 et 5,0 mol/mol, de préférence compris entre 0,05 et 2,0 mol/mol, plus préférentiellement entre 0,1 et 1,5 mol/mol et encore plus préférentiellement entre 0,3 et 1,2 mol/mol.

Ledit composé organique aliphatique, saturé ou insaturé, ou ledit composé organique aromatique, comprenant au moins une fonction acide carboxylique peut être choisi parmi les acides monocarboxyliques, les acides dicarboxyliques, les acides tricarboxyliques, les acides tétracarboxyliques.

Dans un mode de réalisation particulier de l'invention, ledit composé organique est un acide monocarboxylique aliphatique saturé, la chaine aliphatique étant linéaire ou ramifiée ou cyclique. Lorsque le composé organique est un acide monocarboxylique linéaire saturé, il est de préférence choisi parmi l'acide formique, l'acide acétique, l'acide propionique, l'acide butanoïque, l'acide valérique, l'acide hexanoïque, l'acide heptanoïque, l'acide octanoïque, l'acide nonanoïque. De préférence, ledit composé organique est choisi parmi l'acide formique, l'acide acétique, l'acide propionique. Plus préférentiellement, ledit composé organique est l'acide formique. Lorsque le composé organique est un acide monocarboxylique ramifié saturé, il est de préférence choisi parmi l'acide isobutyrique, l'acide pivalique, l'acide méthyl-4-octanoïque, l'acide méthyl-3-valérique, l'acide méthyl-4-valérique, l'acide méthyl-2-valérique, l'acide isovalérique, l'acide éthyl-2-hexanoïque, l'acide méthyl-2-butyrique, l'acide éthyl-2-butyrique, l'acide propyl-2-valérianique, l'acide valproïque, sous l'une quelconque de leurs formes isomères. Lorsque le composé organique est un acide monocarboxylique cyclique saturé, il est de préférence choisi parmi l'acide cyclopentane carboxylique, l'acide cyclohexane carboxylique.

Dans un mode de réalisation particulier de l'invention, ledit composé organique est un acide monocarboxylique aliphatique insaturé, la chaine aliphatique étant linéaire ou ramifiée ou cyclique, de préférence choisi parmi l'acide méthacrylique, l'acide acrylique, l'acide vinylacétique, l'acide crotonique, l'acide isocrotonique, l'acide pentène-2-oïque, l'acide pentène-3-oïque, l'acide pentène-4-oïque, l'acide tiglique, l'acide angélique, l'acide sorbique, l'acide acétylène carboxylique, sous l'une quelconque de leurs formes isomères.

Dans un mode de réalisation particulier de l'invention, ledit composé organique est un acide monocarboxylique aromatique, de préférence choisi parmi l'acide benzoïque, l'acide méthyl-benzoïque, l'acide diméthyl-benzoïque, l'acide triméthyl-benzoïque, l'acide éthyl-benzoïque, l'acide o-tolylacétique, l'acide phénylacétique, l'acide phényl-2-propionique, l'acide phényl-3-propionique, l'acide vinyl-4-benzoïque, l'acide phénylacétylènecarbonique, l'acide cinnamique, sous l'une quelconque de leurs formes isomères.

Dans un mode de réalisation particulier de l'invention, ledit composé organique est un acide dicarboxylique aliphatique saturé ou insaturé, la chaine aliphatique étant linéaire ou ramifiée ou cyclique.

Lorsque le composé organique est un acide dicarboxylique linéaire saturé, il est de préférence choisi parmi l'acide éthanedioïque (acide oxalique), l'acide propanedioïque (acide malonique), l'acide butanedioïque (acide succinique), l'acide pentanedioïque (acide glutarique), l'acide hexanedioïque (acide adipique), l'acide heptanedioïque (acide pimélique), l'acide octanedioïque (acide subérique), l'acide nonanedioïque (acide azélaïque). Lorsque le composé organique est un acide dicarboxylique ramifié saturé, il est de préférence choisi parmi l'acide méthyl-2-glutarique, l'acide méthyl-3-glutarique, l'acide diméthyl-3,3-glutarique, l'acide diméthyl-2,2-glutarique, l'acide butane-1,2-dicarboxylique, sous l'une quelconque de leurs formes isomères.

De préférence, ledit composé organique est choisi parmi l'acide éthanedioïque (acide oxalique), l'acide propanedioïque (acide malonique), l'acide butanedioïque (acide succinique), l'acide pentanedioïque (acide glutarique), sous l'une quelconque de leurs formes isomères.

Lorsque le composé organique est un acide dicarboxylique saturé cyclique, il est de préférence choisi parmi l'acide cyclohexanedicarboxylique, l'acide pinique, sous l'une quelconque de leurs formes isomères.

De façon encore plus préférée, ledit composé organique est choisi parmi l'acide 1,2-cyclohexanedicarboxylique, l'acide 1,3-cyclohexanedicarboxylique, sous l'une quelconque de leurs formes isomères.

Lorsque le composé organique est un acide dicarboxylique insaturé, linéaire ou ramifié ou cyclique, il est de préférence choisi parmi l'acide (Z)-butènedioïque (acide maléique), l'acide (E)-butènedioïque (acide fumarique), l'acide pent-2-ènedioïque (acide glutaconique), l'acide (2E-4E)-hexa-2,4-diènedioïque (acide muconique), l'acide mésaconique, l'acide citraconique, l'acide acétylènedicarboxylique, l'acide méthylène-2-succinique (acide itaconique), l'acide hexadiène-2,4-dioïque, sous l'une quelconque de leurs formes isomères.

De préférence, ledit composé organique est choisi parmi l'acide (Z)-butènedioïque (acide maléique), l'acide (E)-butènedioïque (acide fumarique), l'acide pent-2-ènedioïque (acide glutaconique), l'acide mésaconique, l'acide citraconique, l'acide méthylène-2-succinique (acide itaconique), sous l'une quelconque de leurs formes isomères. De façon encore plus préférée, ledit composé organique est choisi parmi l'acide (Z)-butènedioïque (acide maléique), l'acide (E)-butènedioïque (acide fumarique), l'acide pent-2-ènedioïque (acide glutaconique).

Dans un mode de réalisation particulier de l'invention, ledit composé organique est un acide dicarboxylique aromatique, de préférence choisi parmi l'acide benzène-1,2-dicarboxylique (acide phtalique), l'acide benzène-1,3-dicarboxylique (acide isophtalique), l'acide benzène-1,4-dicarboxylique (acide téréphtalique), l'acide phénylsuccinique, sous l'une quelconque de leurs formes isomères. De préférence, ledit composé organique est l'acide benzène-1,2-dicarboxylique (acide phtalique).

Dans un mode de réalisation particulier de l'invention, ledit composé organique est un acide tricarboxylique aliphatique, saturé ou insaturé, ou aromatique, de préférence choisi parmi l'acide propanetricarboxylique-1,2,3 (acide tricarballylique), l'acide butanetricarboxylique-1,2,4, l'acide propène-tricarboxylique-1,2,3 (acide aconitique), l'acide benzènetricarboxylique-1,3,5 (acide trimésique), l'acide benzènetricarboxylique-1,2,4, sous l'une quelconque de leurs formes isomères. De préférence, ledit composé organique est choisi parmi l'acide propanetricarboxylique-1,2,3 (acide tricarballylique), l'acide butanetricarboxylique-1,2,4, l'acide propène-tricarboxylique-1,2,3 (acide aconitique), l'acide benzènetricarboxylique-1,2,4, sous l'une quelconque de leurs formes isomères.

Dans un mode de réalisation particulier de l'invention, ledit composé organique est un acide tétracarboxylique aliphatique, saturé ou insaturé, ou aromatique, de préférence choisi parmi l'acide méthanetétracarboxylique, l'acide butanetétracarboxylique-1,2,3,4, l'acide éthylènetétracarboxylique, l'acide benzènetétracarboxylique-1,2,4,5, sous l'une quelconque de leurs formes isomères. De préférence, ledit composé organique est choisi parmi l'acide butanetétracarboxylique-1,2,3,4, l'acide benzènetétracarboxylique-1,2,4,5, sous l'une quelconque de leurs formes isomères.

Dans un autre mode de réalisation selon l'invention, ledit composé organique peut comprendre au moins un deuxième groupe fonctionnel choisi parmi les éthers, les hydroxyles, les cétones, les esters. Avantageusement, ledit composé organique comprend au moins une fonction acide carboxylique et au moins une fonction hydroxyle, ou au moins une fonction acide carboxylique et au moins une fonction éther, ou au moins une fonction acide carboxylique et au moins une fonction cétone. Avantageusement, ledit composé organique peut comprendre au moins trois groupes fonctionnels différents choisis parmi au moins une fonction acide carboxylique, au moins une fonction hydroxyle et au moins un groupe fonctionnel différent des fonctions acide carboxylique et hydroxyle, comme une fonction éther ou une fonction cétone.

Parmi les composés organiques comprenant au moins une fonction acide carboxylique et au moins une fonction hydroxyle, on peut citer les hydroxyacides des acides monocarboxyliques, les hydroxyacides des acides dicarboxyliques ou des acides polycarboxyliques, les dihydroxyacides des acides monocarboxyliques ou des acides polycarboxyliques, les trihydroxyacides des acides monocarboxyliques ou des acides polycarboxyliques, et plus généralement les polyhydroxyacides des acides monocarboxyliques ou des acides polycarboxyliques, la chaine carbonée desdits acides pouvant être aliphatique saturée (linéaire, ramifiée ou cyclique), ou aliphatique insaturée (linéaire, ramifiée ou cyclique) ou pouvant contenir au moins un cycle aromatique. De préférence, ledit composé organique est choisi parmi les hydroxyacides ou les dihydroxyacides des acides monocarboxyliques ou des acides dicarboxyliques ou des acides tricarboxyliques.

Lorsque le composé organique est un hydroxyacide d'un acide monocarboxylique, il est de préférence choisi parmi l'acide hydroxyacétique (acide glycolique), l'acide 2-hydroxypropanoïque (acide lactique), l'acide hydroxy-2-isobutyrique ou les autres α-hydroxyacides, l'acide 3-hydroxypropanoïque, l'acide hydroxy-3-butyrique, l'acide 3-hydroxypentanoïque, l'acide hydroxy-3-isobutyrique, l'acide 3-hydroxy-3-méthylbutanoïque, ou les autres β-hydroxyacides, l'acide hydroxy-4-butyrique ou les autres γ-hydroxyacides, l'acide mandélique, l'acide 3-phényllactique, l'acide tropique, l'acide hydroxybenzoïque, l'acide salicylique, l'acide (hydroxy-2-phényl)-acétique, l'acide (hydroxy-3-phényl)-acétique, l'acide (hydroxy-4-phényl)-acétique, l'acide coumarique, sous l'une quelconque de leurs formes isomères. De préférence, ledit composé organique est choisi parmi l'acide hydroxyacétique (acide glycolique), l'acide 2-hydroxypropanoïque (acide lactique), l'acide 3-hydroxypropanoïque, l'acide hydroxy-3-butyrique, l'acide hydroxy-3-isobutyrique, l'acide mandélique, l'acide 3-phényllactique, l'acide tropique, l'acide salicylique, sous l'une quelconque de leurs formes isomères. De façon encore plus préférée, ledit composé organique est choisi parmi l'acide hydroxyacétique (acide glycolique), l'acide 2-hydroxypropanoïque (acide lactique), l'acide 3-hydroxypropanoïque, l'acide hydroxy-3-butyrique, l'acide hydroxy-3-isobutyrique.

Lorsque le composé organique est un hydroxyacide d'un acide polycarboxylique, il est de préférence choisi parmi l'acide 2-hydroxypropanedioïque (acide tartronique), l'acide 2-hydroxybutanedioïque (acide malique), l'acide acétolactique ou les autres α-hydroxyacides ou β-hydroxyacides ou γ-hydroxyacides des acides dicarboxyliques, l'acide hydroxy-5-isophtalique, l'acide 2-hydroxypropane-1,2,3-tricarboxylique (acide citrique), l'acide isocitrique, l'acide homocitrique, l'acide homoisocitrique ou les autres α-hydroxyacides ou β-hydroxyacides ou γ-hydroxyacides des acides tricarboxyliques, sous l'une quelconque de leurs formes isomères. De préférence, ledit composé organique est choisi parmi l'acide 2-hydroxypropanedioïque (acide tartronique), l'acide 2-hydroxybutanedioïque (acide malique), l'acide acétolactique, l'acide 2-hydroxypropane-1,2,3-tricarboxylique (acide citrique), l'acide isocitrique, l'acide homocitrique, l'acide homoisocitrique, sous l'une quelconque de leurs formes isomères. De façon encore plus préférée, ledit composé organique est choisi parmi l'acide 2-hydroxypropanedioïque (acide tartronique), l'acide 2-hydroxybutanedioïque (acide malique), l'acide acétolactique, l'acide 2-hydroxypropane-1,2,3-tricarboxylique (acide citrique).

Lorsque le composé organique est un dihydroxyacide d'un acide monocarboxylique, il est de préférence choisi parmi l'acide glycérique, l'acide 2,3-dihydroxy-3-méthylpentanoïque, l'acide pantoïque ou les autres α,α-dihydroxyacides ou α,β-dihydroxyacides ou α,γ-dihydroxyacides, l'acide 3,5-dihydroxy-3-méthylpentanoïque (acide mévalonique), ou les autres β,β-dihydroxyacides ou β,γ-dihydroxyacides ou γ,γ-dihydroxyacides, l'acide bis-(hydroxyméthyl)-2,2-propionique, l'acide 2,3-dihydroxybenzoïque, l'acide α-résorcylique, l'acide β-résorcylique, l'acide γ-résorcylique, l'acide gentisique, l'acide protocatéchique, l'acide orsellinique, l'acide homogentisique, l'acide caféique, sous l'une quelconque de leurs formes isomères. De préférence, ledit composé organique est choisi parmi l'acide glycérique, l'acide 2,3-dihydroxy-3-méthylpentanoïque, l'acide pantoïque, l'acide 2,3-dihydroxybenzoïque, l'acide β-résorcylique, l'acide γ-résorcylique, l'acide gentisique, l'acide orsellinique, sous l'une quelconque de leurs formes isomères. De façon encore plus préférée, ledit composé organique est choisi parmi l'acide glycérique, l'acide 2,3-dihydroxy-3-méthylpentanoïque, l'acide pantoïque.

Lorsque le composé organique est un dihydroxyacide d'un acide polycarboxylique, il est de préférence choisi parmi l'acide dihydroxymalonique, l'acide 2,3-dihydroxybutanedioïque (acide tartrique) ou les autres α,α-dihydroxyacides ou α,β-dihydroxyacides ou α,γ-dihydroxyacides ou β,β-dihydroxyacides ou β,γ-dihydroxyacides ou γ,γ-dihydroxyacides des acides dicarboxyliques, l'acide hydroxycitrique, sous l'une quelconque de leurs formes isomères. De préférence, ledit composé organique est choisi parmi l'acide dihydroxymalonique, l'acide 2,3-dihydroxybutanedioïque (acide tartrique), l'acide hydroxycitrique, sous l'une quelconque de leurs formes isomères. De façon encore plus préférée, ledit composé organique est choisi parmi l'acide dihydroxymalonique, l'acide 2,3-dihydroxybutanedioïque (acide tartrique).

Lorsque le composé organique est un polyhydroxyacide d'un acide monocarboxylique ou d'un acide polycarboxylique, il est de préférence choisi parmi l'acide shikimique, l'acide trihydroxybenzoïque, l'acide gallique, l'acide phloroglucinique, l'acide pyrogallolcarboxylique, l'acide quinique, l'acide gluconique, l'acide mucique, l'acide saccharique, sous l'une quelconque de leurs formes isomères. De préférence, ledit composé organique est choisi parmi l'acide trihydroxybenzoïque, l'acide quinique, l'acide gluconique, l'acide mucique, l'acide saccharique, sous l'une quelconque de leurs formes isomères. De façon encore plus préférée, ledit composé organique est choisi parmi l'acide quinique, l'acide gluconique, l'acide mucique, l'acide saccharique.

Parmi les composés organiques comprenant au moins une fonction acide carboxylique et au moins une fonction éther, on peut citer l'acide 2-méthoxyacétique, l'acide 2,2'-oxydiacétique (acide diglycolique), l'acide 4-méthoxybenzoïque, l'acide isopropoxy-4-benzoïque, l'acide méthoxy-3-phénylacétique, l'acide méthoxy-3-cinnamique, l'acide méthoxy-4-cinnamique, l'acide 3,4-diméthoxycinnamique, l'acide vératrique, l'acide tétrahydrofurane-carboxylique-2, l'acide furane-carboxylique-3, l'acide 2,5-dihydro-3,4-furane dicarboxylique, selon l'une quelconque de leurs formes isomères. De préférence, ledit composé organique est l'acide 2,2'-oxydiacétique (acide diglycolique).

Parmi les composés organiques comprenant au moins une fonction acide carboxylique et au moins une fonction cétone, on peut citer l'acide glyoxylique, l'acide 2-oxopropanoïque (acide pyruvique), l'acide 2-oxobutanoïque, l'acide 3-oxopentanoïque, l'acide 3-méthyl-2-oxobutanoïque, l'acide 4-méthyl-2-oxopentanoïque, l'acide phénylglyoxylique, l'acide phénylpyruvique, l'acide mésoxalique, l'acide 2-oxoglutarique, l'acide 2-oxohexanedioïque, l'acide oxalosuccinique ou les autres α-cétoacides des acides monocarboxyliques ou des acides polycarboxyliques, l'acide acétylacétique, l'acide acétonedicarboxylique, ou les autres β-cétoacides des acides monocarboxyliques ou des acides polycarboxyliques, l'acide 4-oxopentanoïque (acide lévulinique) ou les autres γ-cétoacides des acides monocarboxyliques ou des acides polycarboxyliques, l'acide acétyl-4-benzoïque, l'acide dioxosuccinique, l'acide 4-maléylacétoacétique ou les autres polycétoacides des acides monocarboxyliques ou des acides polycarboxyliques, selon l'une quelconque de leurs formes isomères. De préférence, ledit composé organique est choisi parmi l'acide glyoxylique, l'acide 2-oxopropanoïque (acide pyruvique), l'acide 2-oxobutanoïque, l'acide 3-méthyl-2-oxobutanoïque, l'acide phénylglyoxylique, l'acide phénylpyruvique, l'acide mésoxalique, l'acide 2-oxoglutarique, l'acide 2-oxohexanedioïque, l'acide oxalosuccinique, l'acide acétylacétique, l'acide acétonedicarboxylique, l'acide 4-oxopentanoïque (acide lévulinique), l'acide dioxosuccinique, selon l'une quelconque de leurs formes isomères. De façon encore plus préférée, ledit composé organique est choisi parmi l'acide glyoxylique, l'acide 2-oxopropanoïque (acide pyruvique), l'acide 2-oxobutanoïque, l'acide 3-méthyl-2-oxobutanoïque, l'acide mésoxalique, l'acide 2-oxoglutarique, l'acide acétylacétique, l'acide acétonedicarboxylique, l'acide 4-oxopentanoïque (acide lévulinique), l'acide dioxosuccinique.

Parmi les composés organiques comprenant au moins une fonction acide carboxylique et au moins une fonction ester, on peut citer l'acide acétylsalicylique.

Parmi les composés organiques comprenant au moins une fonction acide carboxylique, au moins une fonction hydroxyle et au moins une fonction éther, on peut citer l'acide 4-hydroxy-3-méthoxybenzoïque (acide vanillique), l'acide syringique, l'acide glucuronique, l'acide galacturonique, l'acide férulique, l'acide sinapique, selon l'une quelconque de leurs formes isomères. De préférence, ledit composé organique est choisi parmi l'acide 4-hydroxy-3-méthoxybenzoïque (acide vanillique), l'acide glucuronique, l'acide galacturonique, selon l'une quelconque de leurs formes isomères.

Parmi les composés organiques comprenant au moins une fonction acide carboxylique, au moins une fonction hydroxyle et au moins une fonction cétone, on peut citer l'acide hydroxypyruvique, l'acide acétolactique, l'acide iduronique, l'acide ulosonique, l'acide méconique, l'acide 4-hydroxyphénylpyruvique, selon l'une quelconque de leurs formes isomères. De préférence, ledit composé organique est choisi parmi l'acide hydroxypyruvique, l'acide acétolactique, l'acide iduronique, l'acide méconique, selon l'une quelconque de leurs formes isomères.

Parmi tous les modes de réalisation précédents, ledit composé organique comprenant au moins une fonction acide carboxylique est de préférence choisi parmi l'acide formique, l'acide acétique, l'acide propionique, l'acide éthanedioïque (acide oxalique), l'acide propanedioïque (acide malonique), l'acide butanedioïque (acide succinique), l'acide pentanedioïque (acide glutarique), l'acide 1,2-cyclohexanedicarboxylique, l'acide 1,3-cyclohexanedicarboxylique, l'acide (Z)-butènedioïque (acide maléique), l'acide (E)-butènedioïque (acide fumarique), l'acide pent-2-ènedioïque (acide glutaconique), l'acide mésaconique, l'acide citraconique, l'acide méthylène-2-succinique (acide itaconique), l'acide benzène-1,2-dicarboxylique (acide phtalique), l'acide propanetricarboxylique-1,2,3 (acide tricarballylique), l'acide butanetricarboxylique-1,2,4, l'acide propène-tricarboxylique-1,2,3 (acide aconitique), l'acide benzènetricarboxylique-1,2,4, l'acide butanetétracarboxylique-1,2,3,4, l'acide benzènetétracarboxylique-1,2,4,5, l'acide hydroxyacétique (acide glycolique), l'acide 2-hydroxypropanoïque (acide lactique), l'acide 3-hydroxypropanoïque, l'acide hydroxy-3-butyrique, l'acide hydroxy-3-isobutyrique, l'acide mandélique, l'acide 3-phényllactique, l'acide tropique, l'acide salicylique, l'acide 2-hydroxypropanedioïque (acide tartronique), l'acide 2-hydroxybutanedioïque (acide malique), l'acide acétolactique, l'acide 2-hydroxypropane-1,2,3-tricarboxylique (acide citrique), l'acide isocitrique, l'acide homocitrique, l'acide homoisocitrique, l'acide glycérique, l'acide 2,3-dihydroxy-3-méthylpentanoïque, l'acide pantoïque, l'acide 2,3-dihydroxybenzoïque, l'acide β-résorcylique, l'acide γ-résorcylique, l'acide gentisique, l'acide orsellinique, l'acide dihydroxymalonique, l'acide 2,3-dihydroxybutanedioïque (acide tartrique), l'acide hydroxycitrique, l'acide trihydroxybenzoïque, l'acide quinique, l'acide gluconique, l'acide mucique, l'acide saccharique, l'acide 2,2'-oxydiacétique (acide diglycolique), l'acide glyoxylique, l'acide 2-oxopropanoïque (acide pyruvique), l'acide 2-oxobutanoïque, l'acide 3-méthyl-2-oxobutanoïque, l'acide phénylglyoxylique, l'acide phénylpyruvique, l'acide mésoxalique, l'acide 2-oxoglutarique, l'acide 2-oxohexanedioïque, l'acide oxalosuccinique, l'acide acétylacétique, l'acide acétonedicarboxylique, l'acide 4-oxopentanoïque (acide lévulinique), l'acide dioxosuccinique, l'acide acétylsalicylique, l'acide 4-hydroxy-3-méthoxybenzoïque (acide vanillique), l'acide glucuronique, l'acide galacturonique, l'acide hydroxypyruvique, l'acide acétolactique, l'acide iduronique, l'acide méconique, selon l'une quelconque de leurs formes isomères.

Parmi tous les modes de réalisation précédents, ledit composé organique comprenant au moins une fonction acide carboxylique est plus préférentiellement choisi parmi l'acide formique, l'acide éthanedioïque (acide oxalique), l'acide propanedioïque (acide malonique), l'acide butanedioïque (acide succinique), l'acide pentanedioïque (acide glutarique), l'acide (Z)-butènedioïque (acide maléique), l'acide (E)-butènedioïque (acide fumarique), l'acide pent-2-ènedioïque (acide glutaconique), l'acide benzène-1,2-dicarboxylique (acide phtalique), l'acide propanetricarboxylique-1,2,3 (acide tricarballylique), l'acide butanetricarboxylique-1,2,4, l'acide propène-tricarboxylique-1,2,3 (acide aconitique), l'acide benzènetricarboxylique-1,2,4, l'acide butanetétracarboxylique-1,2,3,4, l'acide benzènetétracarboxylique-1,2,4,5, l'acide hydroxyacétique (acide glycolique), l'acide 2-hydroxypropanoïque (acide lactique), l'acide 3-hydroxypropanoïque, l'acide hydroxy-3-butyrique, l'acide hydroxy-3-isobutyrique, l'acide 2-hydroxypropanedioïque (acide tartronique), l'acide 2-hydroxybutanedioïque (acide malique), l'acide acétolactique, l'acide 2-hydroxypropane-1,2,3-tricarboxylique (acide citrique), l'acide glycérique, l'acide 2,3-dihydroxy-3-méthylpentanoïque, l'acide pantoïque, l'acide dihydroxymalonique, l'acide 2,3-dihydroxybutanedioïque (acide tartrique), l'acide quinique, l'acide gluconique, l'acide mucique, l'acide saccharique, l'acide 2,2'-oxydiacétique (acide diglycolique), l'acide glyoxylique, l'acide 2-oxopropanoïque (acide pyruvique), l'acide 2-oxobutanoïque, l'acide 3-méthyl-2-oxobutanoïque, l'acide mésoxalique, l'acide 2-oxoglutarique, l'acide acétylacétique, l'acide acétonedicarboxylique, l'acide 4-oxopentanoïque (acide lévulinique), l'acide dioxosuccinique, l'acide acétylsalicylique, l'acide 4-hydroxy-3-méthoxybenzoïque (acide vanillique), l'acide glucuronique, l'acide galacturonique, l'acide hydroxypyruvique, l'acide acétolactique, l'acide iduronique, l'acide méconique, selon l'une quelconque de leurs formes isomères.

Encore plus préférentiellement, le composé organique comprenant au moins une fonction acide carboxylique est choisi parmi l'acide formique, l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxybutanedioïque (acide malique), l'acide 2-hydroxypropane-1,2,3-tricarboxylique (acide citrique), l'acide 2,3-dihydroxybutanedioïque (acide tartrique), l'acide 2,2'-oxydiacétique (acide diglycolique), l'acide 2-oxopropanoïque (acide pyruvique), l'acide 4-oxopentanoïque (acide lévulinique). Tous les modes de réalisation portant sur la nature dudit composé organique sont combinables entre eux si bien que l'étape ii) peut être réalisée par mise en contact dudit support avec au moins une solution contenant au moins un composé organique comprenant au moins une fonction acide carboxylique, en particulier un composé organique comprenant au moins une fonction acide carboxylique tels que cité(s) ci-avant.

### Mises en œuvre des étapes i) et ii)

Le procédé de préparation du catalyseur au nickel comporte plusieurs modes de mises en œuvre. Ils se distinguent notamment par l'ordre d'introduction du composé organique et du précurseur de nickel, la mise en contact du composé organique avec le support pouvant être effectuée soit après la mise en contact du précurseur de nickel avec le support, soit avant la mise en contact du précurseur de nickel avec le support.

L'étape i) est réalisée avent l'étape ii).

Chaque étape i) et ii) de mise en contact du support avec le précurseur de nickel (étape i), et de mise en contact du support avec au moins une solution contenant au moins un composé organique comprenant au moins une fonction acide carboxylique (étape ii), est réalisée au moins une fois et peut avantageusement être réalisée plusieurs fois, éventuellement en présence d'un précurseur de nickel et/ou d'un composé organique identique(s) ou différent(s) à chaque étape i) et/ou ii) respectivement.

Chaque étape de mise en contact peut être de préférence suivie d'une étape de séchage intermédiaire. L'étape de séchage intermédiaire est effectuée à une température inférieure à 250°C, de préférence comprise entre 15 et 240°C, plus préférentiellement entre 30 et 220°C, encore plus préférentiellement entre 50 et 200°C, et de manière encore plus préférentielle entre 70 et 180°C. Avantageusement, lorsqu'on réalise une étape de séchage intermédiaire, on peut réaliser une étape de calcination intermédiaire. L'étape de calcination intermédiaire est effectuée à une température comprise entre 250°C et 1000°C, de préférence entre 250 et 750°C.

Avantageusement, après chaque étape de mise en contact, que ce soit une étape de mise en contact du précurseur de nickel ou une étape de mise en contact du composé organique, on peut laisser maturer le support imprégné, éventuellement avant une étape de séchage intermédiaire. La maturation permet à la solution de se répartir de manière homogène au sein du support. Lorsqu'une étape de maturation est réalisée, ladite étape est opérée avantageusement à pression atmosphérique ou à pression réduite, sous une atmosphère inerte ou sous une atmosphère contenant de l'oxygène ou sous une atmosphère contenant de l'eau, et à une température comprise entre 10°C et 50°C, et de préférence à température ambiante. Généralement une durée de maturation inférieure à quarante-huit heures et de préférence comprise entre cinq minutes et cinq heures, est suffisante. Des durées plus longues ne sont pas exclues, mais n'apportent pas nécessairement d'amélioration.

### Etape iii) - séchage

Conformément à l'étape de séchage iii) de la mise en œuvre de la préparation du catalyseur, préparé selon au moins un mode de mise en œuvre décrit ci-dessus, l'étape de séchage est effectuée à une température inférieure à 250°C, de préférence comprise entre 15 et 240°C, plus préférentiellement entre 30 et 220°C, encore plus préférentiellement entre 50 et 200°C, et de manière encore plus préférentielle entre 70 et 180°C, pendant une durée typiquement comprise entre 10 minutes et 24 heures. Des durées plus longues ne sont pas exclues, mais n'apportent pas nécessairement d'amélioration.

L'étape de séchage peut être effectuée par toute technique connue de l'Homme du métier. Elle est avantageusement effectuée sous une atmosphère inerte ou sous une atmosphère contenant de l'oxygène ou sous un mélange de gaz inerte et d'oxygène. Elle est avantageusement effectuée à pression atmosphérique ou à pression réduite. De manière préférée, cette étape est réalisée à pression atmosphérique et en présence d'air ou d'azote.

### Etape iv) - calcination

À l'issue de l'étape iii) de séchage, on effectue une étape iv) de calcination à une température comprise entre 250°C et 1000°C, de préférence comprise entre 250°C et 750°C, sous une atmosphère inerte ou sous une atmosphère contenant de l'oxygène. La durée de ce traitement thermique est généralement comprise entre 15 minutes et 10 heures. Des durées plus longues ne sont pas exclues, mais n'apportent pas nécessairement d'amélioration. Après ce traitement, le nickel de la phase active se trouve ainsi sous forme oxyde et le catalyseur ne contient plus ou très peu de composé organique introduit lors de sa synthèse.

### Etape v) - traitement réducteur (optionnelle)

Préalablement à l'utilisation du catalyseur dans le réacteur catalytique et la mise en œuvre d'un procédé d'hydrogénation, on effectue avantageusement au moins une étape de traitement réducteur v) en présence d'un gaz réducteur après les étapes iii) ou iv) de manière à obtenir un catalyseur comprenant du nickel au moins partiellement sous forme métallique.

Ce traitement permet d'activer ledit catalyseur et de former des particules métalliques, en particulier du nickel à l'état zéro valent. Ledit traitement réducteur peut être réalisé *in-situ* ou *ex-situ* c'est-à-dire après ou avant le chargement du catalyseur dans le réacteur d'hydrogénation. Ladite étape v) de traitement réducteur peut être mise en œuvre sur le catalyseur ayant été soumis ou non à l'étape vi) de passivation, décrite par la suite.

Le gaz réducteur est de préférence l'hydrogène. L'hydrogène peut être utilisé pur ou en mélange (par exemple un mélange hydrogène / azote, ou hydrogène / argon, ou hydrogène / méthane). Dans le cas où l'hydrogène est utilisé en mélange, toutes les proportions sont envisageables.

Ledit traitement réducteur est réalisé à une température comprise entre 120 et 500°C, de préférence entre 150 et 450°C. Lorsque le catalyseur ne subit pas de passivation, ou subit un traitement réducteur avant passivation, le traitement réducteur est effectué à une température comprise entre 180 et 500°C, de préférence entre 200 et 450°C, et encore plus préférentiellement entre 350 et 450°C. Lorsque le catalyseur a subi au préalable une passivation, le traitement réducteur est généralement effectué à une température comprise entre 120 et 350°C, de préférence entre 150 et 350°C.

La durée du traitement réducteur est généralement comprise entre 2 et 40 heures, de préférence entre 3 et 30 heures. La montée en température jusqu'à la température de réduction désirée est généralement lente, par exemple fixée entre 0,1 et 10°C/min, de préférence entre 0,3 et 7°C/min.

Le débit d'hydrogène, exprimé en L/heure/gramme de catalyseur est compris entre 0,01 et 100 L/heure/gramme de catalyseur, de préférence entre 0,05 et 10 L/heure/gramme de catalyseur, de façon encore plus préférée entre 0,1 et 5 L/heure/gramme de catalyseur.

### Etape vi) - passivation (optionnelle)

Préalablement à sa mise en œuvre dans le réacteur catalytique, le catalyseur selon l'invention peut éventuellement subir une étape de passivation (étape vi) par un composé soufré ou oxygéné ou par le CO₂ avant ou après l'étape de traitement réducteur v). Cette étape de passivation peut être effectuée *ex-situ* ou *in-situ.* L'étape de passivation est réalisée par la mise en œuvre de méthodes connues de l'Homme du métier.

L'étape de passivation par le soufre permet d'améliorer la sélectivité des catalyseurs et d'éviter les emballements thermiques lors des démarrages de catalyseurs neufs (« run away » selon la terminologie anglo-saxonne). La passivation consiste généralement à empoisonner irréversiblement par le composé soufré les sites actifs les plus virulents du nickel qui existent sur le catalyseur neuf et donc à atténuer l'activité du catalyseur en faveur de sa sélectivité. L'étape de passivation est réalisée par la mise en œuvre de méthodes connues de l'Homme du métier et notamment, à titre d'exemple par la mise en œuvre de l'une des méthodes décrites dans les documents de brevets EP0466567, US5153163, FR2676184, WO2004/098774, EP0707890. Le composé soufré est par exemple choisi parmi les composés suivants: thiophène, thiophane, alkylmonosulfures tels que diméthylsulfure, diéthylsulfure, dipropylsulfure et propylméthylsulfure ou encore un disulfure organique de formule HO-R₁-S-S-R₂-OH tel que le di-thio-di-éthanol de formule HO-C₂H₄-S-S-C₂H₄-OH (appelé souvent DEODS). La teneur en soufre est généralement comprise entre 0,1 et 2 % poids dudit élément par rapport à la masse du catalyseur.

L'étape de passivation par un composé oxygéné ou par le CO₂ est généralement effectuée après un traitement réducteur au préalable à température élevée, généralement comprise entre 350 et 500°C, et permet de préserver la phase métallique du catalyseur en présence d'air. Un deuxième traitement réducteur à température plus basse généralement entre 120 et 350°C, est ensuite généralement effectué. Le composé oxygéné est généralement l'air ou tout autre flux contenant de l'oxygène.

Le catalyseur préparé selon au moins l'un quelconque des modes de réalisation décrits ci-dessus, en association ou non avec ladite étape iv) et/ou ladite étape v) et/ou ladite étape vi), se trouve, avant la mise en œuvre du procédé d'hydrogénation sélective selon l'invention, soit entièrement soit au moins partiellement débarrassé dudit composé organique comprenant au moins une fonction acide carboxylique. L'introduction du composé organique lors de sa préparation a permis d'augmenter la dispersion de la phase active menant ainsi à un catalyseur plus actif et/ou plus sélectif.

L'invention est illustrée par les exemples qui suivent.

### Exemples

L'ensemble des catalyseurs préparés dans les exemples 1 à 10 sont préparés à isoteneur en élément nickel. Le support utilisé pour la préparation de chacun de ces catalyseurs est une alumine delta ayant un volume poreux de 0,67 mL/g et une surface BET égale à 70 m²/g.

### Exemple 1 : Préparation des solutions aqueuses de précurseurs de Ni

Une première solution aqueuse de précurseurs de Ni (solution S1) utilisée pour la préparation des catalyseurs A, B, D, E, F, I est préparée à 25°C en dissolvant 276 g de nitrate de nickel Ni(NO₃)₂.6H₂O (fournisseur Strem Chemicals^{®}) dans un volume de 100 mL d'eau déminéralisée. On obtient la solution S1 dont la concentration en NiO est de 19,0 %poids (par rapport à la masse de la solution).

Une deuxième solution aqueuse de précurseurs de Ni (solution S2) utilisée pour la préparation des catalyseurs C, G et H est préparée à 25°C en dissolvant 151 g de nitrate de nickel Ni(NO₃)₂.6H₂O (fournisseur Strem Chemicals^{®}) dans un volume de 50 mL d'eau déminéralisée. On obtient la solution S2 dont la concentration en NiO est de 19,3 %poids (par rapport à la masse de la solution).

### Exemple 2 (comparatif) : Préparation d'un catalyseur A par imprégnation de nitrate de nickel sans additif

La solution S1 préparée à l'exemple 1 est imprégnée à sec sur 10 g dudit support d'alumine. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné A ainsi préparé contient 13,8 %poids de l'élément nickel supporté sur alumine et il présente des cristallites d'oxyde de nickel dont le diamètre moyen (déterminé par diffraction des rayons X à partir de la largeur de la raie de diffraction située à l'angle 2thêta=43°) est de 19,1 nm.

### Exemple 3 (invention) : Préparation d'un catalyseur B par imprégnation successive de nitrate de nickel puis d'acide propanedioïque (acide malonique)

Le catalyseur B est préparé par imprégnation de nitrate de Ni sur ledit support d'alumine puis par imprégnation d'acide malonique en utilisant un ratio molaire {acide malonique / nickel} égal à 0,6.

Pour ce faire, la solution S1 préparée à l'exemple 1 est imprégnée à sec sur ledit support d'alumine. Le solide B1 ainsi obtenu est ensuite séché en étuve pendant une nuit à 120°C. Puis, une solution aqueuse B' est préparée par dissolution de 4,81 g d'acide malonique (CAS 141-82-2, fournisseur Alfa Aesar, pureté 99%) dans 20 mL d'eau déminéralisée. Cette solution B' est ensuite imprégnée à sec sur 10 g du solide B1 préalablement préparé. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné B ainsi préparé contient 13,8 %poids de l'élément nickel supporté sur alumine et il présente des cristallites d'oxyde de nickel dont le diamètre moyen est de 3,8 nm.

### Exemple 4 (invention) : Préparation d'un catalyseur C par imprégnation successive d'acide propanedioïque (acide malonique) puis de nitrate de nickel

Le catalyseur C est préparé par imprégnation d'acide malonique sur ledit support d'alumine puis par imprégnation de nitrate de Ni en utilisant un ratio molaire {acide malonique / nickel} égal à 0,6.

Pour ce faire, une solution aqueuse C' est préparée par dissolution de 4,81 g d'acide malonique (CAS 141-82-2, fournisseur Alfa Aesar, pureté 99%) dans 20 mL d'eau déminéralisée. Cette solution C' est ensuite imprégnée à sec sur ledit support alumine. Le solide C1 ainsi obtenu est ensuite séché en étuve pendant une nuit à 120°C. Puis, la solution S2 préparée à l'exemple 1 est imprégnée à sec sur 10 g du solide C1 préalablement préparé. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné C ainsi préparé contient 13,8 %poids de l'élément nickel supporté sur alumine et il présente des cristallites d'oxyde de nickel dont le diamètre moyen est de 4,5 nm.

### Exemple 5 (invention) : Préparation d'un catalyseur D par imprégnation successive de nitrate de nickel puis d'acide 2-hydroxypropanoïque (acide lactique)

Le catalyseur D est préparé par imprégnation de nitrate de Ni sur ledit support d'alumine puis par imprégnation d'acide lactique en utilisant un ratio molaire {acide lactique / nickel} égal à 0,6.

Pour ce faire, la solution S1 préparée à l'exemple 1 est imprégnée à sec sur ledit support d'alumine. Le solide D1 ainsi obtenu est ensuite séché en étuve pendant une nuit à 120°C. Puis, une solution aqueuse D' est préparée par dissolution de 4,19 g d'acide lactique (CAS 15-21-5, fournisseur Fluka) dans 20 mL d'eau déminéralisée. Cette solution D' est ensuite imprégnée à sec sur 10 g du solide D1 préalablement préparé. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné D ainsi préparé contient 13,8 %poids de l'élément nickel supporté sur alumine et il présente des cristallites d'oxyde de nickel dont le diamètre moyen est de 5,1 nm.

### Exemple 6 (invention) : Préparation d'un catalyseur E par imprégnation successive de nitrate de nickel puis d'acide 2-hydroxypropanoïque (acide tactique), avec un ratio molaire additif sur nickel de 0,3

Le catalyseur E est préparé par imprégnation de nitrate de Ni sur ledit support d'alumine puis par imprégnation d'acide lactique en utilisant un ratio molaire {acide lactique / nickel} égal à 0,3.

Pour ce faire, la solution S1 préparée à l'exemple 1 est imprégnée à sec sur ledit support d'alumine. Le solide E1 ainsi obtenu est ensuite séché en étuve pendant une nuit à 120°C. Puis, une solution aqueuse E' est préparée par dissolution de 2,1 g d'acide lactique (CAS 15-21-5, fournisseur Fluka) dans 20 mL d'eau déminéralisée. Cette solution E' est ensuite imprégnée à sec sur 10 g du solide E1 préalablement préparé. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné E ainsi préparé contient 13,8 %poids de l'élément nickel supporté sur alumine et il présente des cristallites d'oxyde de nickel dont le diamètre moyen est de 6,0 nm.

### Exemple 7 (invention) : Préparation d'un catalyseur F par imprégnation successive de nitrate de nickel puis d'acide 2-hydroxypropanoïque (acide lactique), avec un ratio molaire additif sur nickel de 1,2

Le catalyseur F est préparé par imprégnation de nitrate de Ni sur ledit support d'alumine puis par imprégnation d'acide lactique en utilisant un ratio molaire {acide lactique / nickel} égal à 1,2.

Pour ce faire, la solution S1 préparée à l'exemple 1 est imprégnée à sec sur ledit support d'alumine. Le solide F1 ainsi obtenu est ensuite séché en étuve pendant une nuit à 120°C. Puis, une solution aqueuse F' est préparée par dissolution de 8,39 g d'acide lactique (CAS 15-21-5, fournisseur Fluka) dans 20 mL d'eau déminéralisée. Cette solution F' est ensuite imprégnée à sec sur 10 g du solide F1 préalablement préparé. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné F ainsi préparé contient 13,8 %poids de l'élément nickel supporté sur alumine et il présente des cristallites d'oxyde de nickel dont le diamètre moyen est de 4,8 nm.

### Exemple 8 (invention) : Préparation d'un catalyseur G par imprégnation successive d'acide 2-oxopropanoïque (acide pyruvique) puis de nitrate de nickel

Le catalyseur G est préparé par imprégnation d'acide pyruvique sur ledit support d'alumine puis par imprégnation de nitrate de Ni en utilisant un ratio molaire {acide pyruvique / nickel} égal à 0,6.

Pour ce faire, une solution aqueuse G' est préparée par dissolution de 4,07 g d'acide pyruvique (CAS 127-17-3, fournisseur Sigma Aldrich, pureté 98%) dans 20 mL d'eau déminéralisée. Cette solution G' est ensuite imprégnée à sec sur ledit support alumine. Le solide G1 ainsi obtenu est ensuite séché en étuve pendant une nuit à 120°C. Puis, la solution S2 préparée à l'exemple 1 est imprégnée à sec sur 10 g du solide G1 préalablement préparé. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné G ainsi préparé contient 13,8 %poids de l'élément nickel supporté sur alumine et il présente des cristallites d'oxyde de nickel dont le diamètre moyen est de 6,2 nm.

### Exemple 9 (invention) : Préparation d'un catalyseur H par imprégnation successive d'acide 2-oxopropanoïque (acide pyruvique) puis de nitrate de nickel, sans calcination finale

Le catalyseur H est préparé par imprégnation d'acide pyruvique sur ledit support d'alumine puis par imprégnation de nitrate de Ni en utilisant un ratio molaire {acide pyruvique / nickel} égal à 0,6.

Pour ce faire, une solution aqueuse H' est préparée par dissolution de 4,07 g d'acide pyruvique (CAS 127-17-3, fournisseur Sigma Aldrich, pureté 98%) dans 20 mL d'eau déminéralisée. Cette solution H' est ensuite imprégnée à sec sur ledit support alumine. Le solide H1 ainsi obtenu est ensuite séché en étuve pendant une nuit à 120°C. Puis, la solution préparée à l'exemple 1 est imprégnée à sec sur 10 g du solide H1 préalablement préparé. Le solide ainsi obtenu est ensuite séché en étuve pendant une nuit à 120°C, sans autre traitement thermique. On obtient le catalyseur H.

Pour réaliser les caractérisations, une partie de ce catalyseur H est calciné sous un flux d'air de 1 L/h/g de catalyseur à 450°C pendant 2 heures, pour obtenir le catalyseur calciné H_calci. Le catalyseur calciné H_calci contient 13,8 %poids de l'élément nickel supporté sur alumine et il présente des cristallites d'oxyde de nickel dont le diamètre moyen est de 5,9 nm.

### Exemple 10 (invention) : Préparation d'un catalyseur I par imprégnation successive de nitrate de nickel puis d'acide 2,2'-oxobis-éthanoïque (acide diglycolique)

Le catalyseur I est préparé par imprégnation de nitrate de Ni sur ledit support d'alumine puis par imprégnation d'acide diglycolique en utilisant un ratio molaire {acide diglycolique / nickel} égal à 0,6.

Pour ce faire, la solution S1 préparée à l'exemple 1 est imprégnée à sec sur ledit support d'alumine. Le solide I1 ainsi obtenu est ensuite séché en étuve pendant une nuit à 120°C. Puis, une solution aqueuse I' est préparée par dissolution de 6,20 g d'acide diglycolique (CAS 110-99-6, fournisseur Alfa Aesar, pureté 98%) dans 20 mL d'eau déminéralisée. Cette solution I' est ensuite imprégnée à sec sur 10 g du solide I1 préalablement préparé. Le solide ainsi obtenu est ensuite séché en étuve pendant une nuit à 120°C, puis calciné sous un flux d'air de 1 L/h/g de catalyseur à 450°C pendant 2 heures.

Le catalyseur calciné I ainsi préparé contient 13,8 %poids de l'élément nickel supporté sur alumine et il présente des cristallites d'oxyde de nickel dont le diamètre moyen est de 4,8 nm.

### Exemple 11 (invention) : Évaluation des propriétés catalytiques des catalyseurs A à I en hydrogénation sélective d'un mélange contenant du styrène et de l'isoprène

Les catalyseurs A à I décrits dans les exemples ci-dessus sont testés vis-à-vis de la réaction d'hydrogénation sélective d'un mélange contenant du styrène et de l'isoprène.

La composition de la charge à hydrogéner sélectivement est la suivante : 8 %pds styrène (fournisseur Sigma Aldrich^{®}, pureté 99%), 8 %pds isoprène (fournisseur Sigma Aldrich^{®}, pureté 99%), 84 %pds n-heptane (solvant) (fournisseur VWR^{®}, pureté > 99% chromanorm HPLC). Cette charge contient également des composés soufrés en très faible teneur : 10 ppm pds de soufre introduits sous forme de pentanethiol (fournisseur Fluka^{®}, pureté > 97%) et 100 ppm pds de soufre introduits sous forme de thiophène (fournisseur Merck^{®}, pureté 99%). Cette composition correspond à la composition initiale du mélange réactionnel. Ce mélange de molécules modèles est représentatif d'une essence de pyrolyse.

La réaction d'hydrogénation sélective est opérée dans un autoclave de 500 mL en acier inoxydable, muni d'une agitation mécanique à entraînement magnétique et pouvant fonctionner sous une pression maximale de 100 bar (10 MPa) et des températures comprises entre 5°C et 200°C.

Préalablement à son introduction dans l'autoclave, une quantité de 3 mL de catalyseur est réduite *ex situ* sous un flux d'hydrogène de 1 L/h/g de catalyseur, à 400 °C pendant 16 heures (rampe de montée en température de 1 °C/min), puis elle est transvasée dans l'autoclave, à l'abri de l'air. Après ajout de 214 mL de n-heptane (fournisseur VWR^{®}, pureté > 99% chromanorm HPLC), l'autoclave est fermé, purgé, puis pressurisé sous 35 bar (3,5 MPa) d'hydrogène, et porté à la température du test égale à 30°C. Au temps t=0, environ 30 g d'un mélange contenant du styrène, de l'isoprène, du n-heptane, du pentanethiol et du thiophène sont introduits dans l'autoclave. Le mélange réactionnel a alors la composition décrite ci-dessus et l'agitation est mise en route à 1600 tr/min. La pression est maintenue constante à 35 bar (3,5 MPa) dans l'autoclave à l'aide d'une bouteille réservoir située en amont du réacteur.

L'avancement de la réaction est suivi par prélèvement d'échantillons du milieu réactionnel à intervalles de temps réguliers : le styrène est hydrogéné en éthylbenzène, sans hydrogénation du cycle aromatique, et l'isoprène est hydrogéné en méthyl-butènes. Si la réaction est prolongée plus longtemps que nécessaire, les méthyl-butènes sont à leur tour hydrogénés en isopentane. La consommation d'hydrogène est également suivie au cours du temps par la diminution de pression dans une bouteille réservoir située en amont du réacteur. L'activité catalytique est exprimée en moles de H₂ consommées par minute et par gramme de Ni.

Les activités catalytiques mesurées pour les catalyseurs A à I sont reportées dans le Tableau 1 ci-dessous. Elles sont rapportées à l'activité catalytique mesurée pour le catalyseur A (A_{HYD1}).

**Tableau 1 : Comparaison des performances en hydrogénation sélective d'un mélange contenant du styrène et de l'isoprène.**

| Catalyseur | Additif utilisé | Mode d'introduction de l'additif | Taille moyenne des cristallites de NiO (nm) | A_{HYD1} (%) |
|---|---|---|---|---|
| A (non conforme) | - | - | 19,1 | 100 |
| B (conforme) | Acide malonique | Etapes i) puis ii) | 3,8 | 457 |
| C (conforme) | Acide malonique | Etapes ii) puis i) | 4,5 | 386 |
| D (conforme) | Acide lactique | Etapes i) puis ii) | 5,1 | 363 |
| E (conforme) | Acide lactique | Etapes i) puis ii) - Ratio molaire additif / Ni = 0,3 | 6,0 | 319 |
| F (conforme) | Acide lactique | Etapes i) puis ii) - Ratio molaire additif / Ni = 1,2 | 4,8 | 384 |
| G (conforme) | Acide pyruvique | Etapes ii) puis i) | 6,2 | 308 |
| H (conforme) | Acide pyruvique | Etapes ii) puis i) - Sans calcination | 5,9 | 327 |
| I (conforme) | Acide diglycolique | Etapes i) puis ii) | 4,8 | 376 |

Les résultats figurant dans le tableau 1 démontrent que les catalyseurs B à I, préparés en présence d'un composé organique (ayant au moins une fonction de type acide carboxylique), sont plus actifs que le catalyseur A préparé en l'absence de ce type de composé organique. Cet effet est lié à la diminution de la taille des particules de Ni.

## Revendications

1. Procédé d'hydrogénation sélective de composés polyinsaturés contenant au moins 2 atomes de carbone par molécule, tels que les dioléfines et/ou les acétyléniques et/ou les alcénylaromatiques, contenus dans une charge d'hydrocarbures ayant un point d'ébullition final inférieur ou égal à 300°C, lequel procédé étant réalisé à une température comprise entre 0 et 300°C, à une pression comprise entre 0,1 et 10 MPa, à un ratio molaire hydrogène/(composés polyinsaturés à hydrogéner) compris entre 0,1 et 10 et à une vitesse volumique horaire comprise entre 0,1 et 200 h⁻¹ lorsque le procédé est réalisé en phase liquide, ou à un ratio molaire hydrogène/(composés polyinsaturés à hydrogéner) compris entre 0,5 et 1000 et à une vitesse volumique horaire entre 100 et 40000 h⁻¹ lorsque le procédé est réalisé en phase gazeuse, en présence d'un catalyseur comprenant un support en alumine et une phase active comprenant du nickel, ladite phase active ne comprenant pas de métal du groupe VIB, le nickel se présentant sous la forme de nanoparticules dont leur taille, mesurée sous leur forme oxyde, est comprise entre 4 et 6 nm, ledit catalyseur étant préparé par un procédé comprenant au moins :
i) une étape de mise en contact dudit support avec au moins une solution contenant au moins un précurseur de nickel ;
ii) une étape de mise en contact dudit support avec au moins une solution contenant au moins un composé organique comprenant au moins une fonction acide carboxylique, ledit composé organique comprend entre 1 et 10 atomes de carbone ;
iii) une étape de séchage dudit support imprégné à une température inférieure à 250°C ;
iv) une étape de calcination dudit catalyseur obtenu à l'étape iii) à une température comprise entre 250 et 1000°C ;
**caractérisé en ce que** l'étape i) est réalisée avant l'étape ii).

2. Procédé selon la revendication 1, **caractérisé en ce que** les étapes i) et/ou ii) est (sont) réalisée(s) par imprégnation à sec.

3. Procédé selon l'une quelconque des revendications précédentes, **caractérisé en ce que** la teneur en élément nickel est comprise entre 1 et 35% en poids par rapport au poids total du catalyseur.

4. Procédé selon l'une quelconque des revendications précédentes, **caractérisé en ce que** ledit composé organique est choisi parmi les acides monocarboxyliques, les acides dicarboxyliques, les acides tricarboxyliques, les acides tétracarboxyliques.

5. Procédé selon l'une quelconque des revendications précédentes, **caractérisé en ce que** ledit composé organique comprenant au moins une fonction acide carboxylique comprend en outre au moins un deuxième groupe fonctionnel choisi parmi les éthers, les hydroxyles, les cétones, les esters.

6. Procédé selon la revendication 5, **caractérisé en ce que** ledit composé organique comprend au moins une fonction acide carboxylique et au moins une fonction hydroxyle.

7. Procédé selon la revendication 5, **caractérisé en ce que** ledit composé organique comprend au moins trois groupes fonctionnels différents choisis parmi au moins une fonction acide carboxylique, au moins une fonction hydroxyle et au moins une fonction éther ou une fonction cétone.

8. Procédé selon l'une quelconque des revendications précédentes, **caractérisé en ce que** le ratio molaire entre ledit composé organique et le nickel est compris entre 0,01 et 5.

9. Procédé selon l'une quelconque des revendications 1 à 8, **caractérisé en ce que** la charge est choisie parmi une coupe C2 de vapocraquage ou une coupe C2-C3 de vapocraquage, et dans lequel procédé le ratio molaire (hydrogène)/(composés polyinsaturés à hydrogéner) est compris entre 0,5 et 1000, la température est comprise entre 0 et 300°C, la vitesse volumique horaire (V.V.H.) est comprise entre 100 et 40000 h-1, et la pression est comprise entre 0,1 et 6,0 MPa.

10. Procédé selon l'une quelconque des revendications 1 à 8, **caractérisé en ce que** la charge est choisie parmi les essences de vapocraquage et dans lequel procédé le ratio molaire (hydrogène)/(composés polyinsaturés à hydrogéner) est compris entre 0,5 et 10, la température est comprise entre 0 et 200°C, la vitesse volumique horaire (V.V.H.) est comprise entre 0,5 et 100 h-1, et la pression est comprise entre 0,3 et 8,0 MPa.

## Patentansprüche

1. Verfahren zur selektiven Hydrierung von mehrfach ungesättigten Verbindungen mit mindestens 2 Kohlenstoffatomen pro Molekül, wie Diolefinen und/oder acetylenischen Verbindungen und/oder alkenylaromatischen Verbindungen, die in einem Kohlenwasserstoff-Einsatzstoff mit einem Siedeende kleiner oder gleich 300 °C enthalten sind, wobei das Verfahren bei einer Temperatur zwischen 0 und 300 °C, bei einem Druck zwischen 0,1 und 10 MPa, bei einem Molverhältnis von Wasserstoff zu mehrfach ungesättigten Verbindungen, die zu hydrieren sind, zwischen 0,1 und 10 und einer Katalysatorbelastung zwischen 0,1 und 200 h⁻¹, wenn das Verfahren in der Flüssigphase durchgeführt wird, oder bei einem Molverhältnis von Wasserstoff zu mehrfach ungesättigten Verbindungen, die zu hydrieren sind, zwischen 0,5 und 1000 und einer Katalysatorbelastung zwischen 100 und 40.000 h⁻¹, wenn das Verfahren in der Flüssigphase durchgeführt wird, in Gegenwart eines Katalysators, der einen Aluminiumoxid-Träger und eine Nickel umfassende aktive Phase umfasst, wobei die aktive Phase kein Metal der Gruppe VIB umfasst, durchgeführt wird, wobei das Nickel in Form von Nanopartikeln vorliegt, deren in ihrer Oxidform gemessene Größe zwischen 4 und 6 nm liegt, wobei der Katalysator durch ein Verfahren hergestellt wird, dass mindestens Folgendes umfasst:
i) einen Schritt des Inkontaktbringens des Trägers mit einer Lösung, die mindestens einen Nickelvorläufer enthält;
ii) einen Schritt des Inkontaktbringens des Trägers mit mindestens einer Lösung, die mindestens eine organische Verbindung mit mindestens einer Carbonsäurefunktion enthält, wobei die organische Verbindung zwischen 1 und 10 Kohlenstoffatome umfasst;
iii) einen Schritt der Trocknung des imprägnierten Trägers bei einer Temperatur unter 250 °C;
iv) einen Schritt der Calcinierung des in Schritt iii) erhaltenen Katalysators bei einer Temperatur zwischen 250 und 1000°;
**dadurch gekennzeichnet, dass** Schritt i) vor Schritt ii) durchgeführt wird.

2. Verfahren nach Anspruch 1, **dadurch gekennzeichnet, dass** man die Schritte i) und/oder ii) durch Trockenimprägnierung durchführt.

3. Verfahren nach einem der vorhergehenden Ansprüche, **dadurch gekennzeichnet, dass** der Gehalt an Nickelelement zwischen 1 und 35 Gew.-%, bezogen auf das Gesamtgewicht des Katalysators, liegt.

4. Verfahren nach einem der vorhergehenden Ansprüche, **dadurch gekennzeichnet, dass** die organische Verbindung aus Monocarbonsäuren, Dicarbonsäuren, Tricarbonsäuren und Tetracarbonsäuren ausgewählt wird.

5. Verfahren nach einem der vorhergehenden Ansprüche, **dadurch gekennzeichnet, dass** die organische Verbindung mit mindestens einer Carbonsäurefunktion außerdem mindestens eine zweite funktionelle Gruppe umfasst, die aus Ether-, Hydroxyl-, Keton- und Esterfunktionen ausgewählt ist.

6. Verfahren nach Anspruch 5, **dadurch gekennzeichnet, dass** die organische Verbindung mindestens eine Carbonsäurefunktion und mindestens eine Hydroxylfunktion umfasst.

7. Verfahren nach Anspruch 5, **dadurch gekennzeichnet, dass** die organische Verbindung mindestens drei verschiedene funktionelle Gruppen umfasst, die aus mindestens einer Carbonsäurefunktion, mindestens eine Hydroxylfunktion und mindestens einer Etherfunktion oder einer Ketonfunktion ausgewählt sind.

8. Verfahren nach einem der vorhergehenden Ansprüche, **dadurch gekennzeichnet, dass** das Molverhältnis zwischen der organischen Verbindung und dem Nickel zwischen 0,01 und 5 liegt.

9. Verfahren nach einem der Ansprüche 1 bis 8, **dadurch gekennzeichnet, dass** der Einsatzstoff aus einem C2-Schnitt aus dem Dampfcracken oder einem C2-C3-Schnitt aus dem Dampfcracken ausgewählt wird und bei dem Verfahren das Molverhältnis von Wasserstoff zu mehrfach ungesättigten Verbindungen, die zu hydrieren sind, zwischen 0,5 und 1000 liegt, die Temperatur zwischen 0 und 300 °C liegt, die Katalysatorbelastung (VVH) zwischen 100 und 40.000 h⁻¹ liegt und der Druck zwischen 0,1 und 6,0 MPa liegt.

10. Verfahren nach einem der Ansprüche 1 bis 8, **dadurch gekennzeichnet**, **dadurch gekennzeichnet, dass** der Einsatzstoff aus Benzinen aus dem Dampfcracken ausgewählt wird und bei dem Verfahren das Molverhältnis von Wasserstoff zu mehrfach ungesättigten Verbindungen, die zu hydrieren sind, zwischen 0,5 und 10 liegt, die Temperatur zwischen 0 und 200 °C liegt, die Katalysatorbelastung (VVH) zwischen 0,5 und 100 h⁻¹ liegt und der Druck zwischen 0,3 und 8,0 MPa liegt.

## Claims

1. Process for the selective hydrogenation of polyunsaturated compounds containing at least 2 carbon atoms per molecule, such as diolefins and/or acetylenic compounds and/or alkenylaromatic compounds, contained in a hydrocarbon feedstock having a final boiling point below or equal to 300°C, which process being carried out at a temperature between 0 and 300°C, at a pressure between 0.1 and 10 MPa, at a hydrogen/(polyunsaturated compounds to be hydrogenated) molar ratio between 0.1 and 10 and at an hourly space velocity of between 0.1 and 200 h⁻¹ when the process is carried out in the liquid phase, or at a hydrogen/(polyunsaturated compounds to be hydrogenated) molar ratio between 0.5 and 1000 and at an hourly space velocity of between 100 and 40 000 h⁻¹ when the process is carried out in the gas phase, in the presence of a catalyst comprising an alumina support and an active phase comprising nickel, said active phase not comprising a metal from Group VIB, the nickel being in the form of nanoparticles, of which their size, measured in their oxide form, is between 4 and 6 nm, said catalyst being prepared by a process comprising at least:
i) a step of bringing said support into contact with at least one solution containing at least one nickel precursor;
ii) a step of bringing said support into contact with at least one solution containing at least one organic compound comprising at least one carboxylic acid function, said organic compound comprises between 1 and 10 carbon atoms;
iii) a step of drying said impregnated support at a temperature below 250°C;
iv) a step of calcining said catalyst obtained in step iii) at a temperature of between 250 and 1000°C; **characterized in that** step i) is carried out before step ii) .

2. Process according to Claim 1, **characterized in that** steps i) and/or ii) is (are) carried out by dry impregnation.

3. Process according to either one of the preceding claims, **characterized in that** the content of the element nickel is between 1 and 35% by weight relative to the total weight of the catalyst.

4. Process according to any one of the preceding claims, **characterized in that** said organic compound is chosen from monocarboxylic acids, dicarboxylic acids, tricarboxylic acids or tetracarboxylic acids.

5. Process according to any one of the preceding claims, **characterized in that** said organic compound comprising at least one carboxylic acid function further comprises at least one second functional group chosen from ethers, hydroxyls, ketones, esters.

6. Process according to Claim 5, **characterized in that** said organic compound comprises at least one carboxylic acid function and at least one hydroxyl function.

7. Process according to Claim 5, **characterized in that** said organic compound comprises at least three different functional groups chosen from at least one carboxylic acid function, at least one hydroxyl function and at least one ether function or one ketone function.

8. Process according to any one of the preceding claims, **characterized in that** the molar ratio between said organic compound and the nickel is between 0.01 and 5.

9. Process according to any one of Claims 1 to 8, **characterized in that** the feedstock is chosen from a steam cracking C2 cut or a steam cracking C2-C3 cut, and in which process the (hydrogen)/(polyunsaturated compounds to be hydrogenated) molar ratio is between 0.5 and 1000, the temperature is between 0 and 300°C, the hourly space velocity (HSV) is between 100 and 40 000 h⁻¹, and the pressure is between 0.1 and 6.0 MPa.

10. Process according to any one of Claims 1 to 8, **characterized in that** the feedstock is chosen from steam cracking gasolines and in which process the (hydrogen)/ (polyunsaturated compounds to be hydrogenated) molar ratio is between 0.5 and 10, the temperature is between 0 and 200°C, the hourly space velocity (HSV) is between 0.5 and 100 h⁻¹, and the pressure is between 0.3 and 8.0 MPa.
